Europäisches Patentamt

European Patent Office

Office européen des brevets

(19)

(11) Numéro de publication: **0 011 001**
**B1**

(12) **FASCICULE DE BREVET EUROPEEN**

(45) Date de publication du fascicule du brevet: **24.03.82**

(51) Int. Cl.³: **B 65 G 69/10**

(21) Numéro de dépôt: **79400685.8**

(22) Date de dépôt: **27.09.79**

(54) Installation de stockage de produits en vrac sur un parc d'homogénéisation circulaire.

(30) Priorité: **03.11.78 FR 7831182**

(43) Date de publication de la demande:
**14.05.80 Bulletin 80/10**

(45) Mention de la délivrance du brevet:
**24.03.82 Bulletin 82/12**

(84) Etats contractants désignés:
**BE DE GB IT NL**

(56) Documents cités:
**FR - A - 1 272 184**
**FR - A - 2 068 617**
**FR - E 79 145**

(73) Titulaire: **FIVES-CAIL BABCOCK, Société anonyme**
**7 rue Montalivet**
**F-75383 Paris Cedex 08 (FR)**

(72) Inventeur: **Chever, René**
**75, Boulevard de Picpus**
**F-75012 Paris (FR)**

(74) Mandataire: **Fontanié, Etienne**
**FIVES-CAIL BABCOCK 7, rue Montalivet**
**F-75383 Paris Cedex 08 (FR)**

Courier Press, Leamington Spa, England.

## Installation de stockage de produits en vrac sur un parc d'homogénéisation circulaire

La présente invention concerne le stockage de produits en vrac sous la forme d'un tas continu constitué sur un parc circulaire d'homogénéisation.

On sait qu'un tas du type dit continu ou sans fin constitué sur une aire circulaire, comprend deux zones distinctes. Une première zone qui correspond au tas entièrement formé, est disponible pour la reprise des produits stockés. Elle possède une section droite radiale triangulaire de dimension constante. Un appareil de reprise la limite à l'une de ses extrémités suivant une surface plane à trace horizontale radiale et inclinée par rapport à la verticale. Une deuxième zone qui correspond au tas en cours de formation, est attenante à la précédente qu'elle prolonge à l'extrémité opposée à celle qui est limitée par l'appareil de reprise. La séparation des deux zones doit être décalée au fur et à mesure de la formation du tas correspondant à ladite deuxième zone.

A cet effet, on connaît déjà un procédé de stockage de produits en vrac sur un parc d'homogénéisation circulaire, consistant à déposer les produits suivant des couches superposées ayant en coupe la forme d'un chevron, et dont la ligne de faîte est sensiblement inclinée par rapport à l'horizontale, de façon à former un tas de section régulièrement décroissante le long d'un trajet en arc de cercle, au moyen d'un jeteur animé d'un mouvement circulaire au-dessus du tas, ledit jeteur étant alimenté en produits par un transporteur, et à décaler séquentiellement l'origine du trajet en arc de cercle de manière à faire progresser le tas suivant ledit trajet.

La difficulté recontrée consiste à réaliser une commande du décalage qui permette de maintenir constante la hauteur du tas entièrement formé, chaque fois qu'une fraction du tas en cours de formation est achevée et passe donc de la deuxième à la première zone.

L'invention a surtout pour but de surmonter cette difficulté d'une manière originale et sûre.

Elle a plus précisément pour objet une installation de stockage de produits en vrac sur un parc d'homogénéisation circulaire où les produits sont déposés suivant des couches superposées ayant en coupe la forme d'un chevron, et dont la ligne de faîte est sensiblement inclinée par rapport à l'horizontale, de façon à former un tas de section régulièrement décroissante le long d'un trajet en arc de cercle, comportant un jeteur animé d'un mouvement circulaire au-dessus du tas, autour d'un arbre d'entrainement, un transporteur d'alimentation dudit jeteur, et des moyens permettant d'effectuer le décalage de l'origine du trajet en arc de cercle en fonction de la quantité de produits amenés au transporteur d'alimentation, caractérisée en ce que lesdits moyens de décalage comprennent un détecteur de rotation de l'arbre d'entrainement de jeteur, délivrant un nombre de tops proportionnel à l'angle de rotation dudit jeteur, et un compteur-décompteur dans lequel on introduit périodiquement un nombre constant de tops proportionel à l'étendue angulaire du tas, ledit nombre étant corrigé périodiquement d'un nombre de tops constant, correspondant à un décalage à pas constant, délivrés par des moyens de contrôle d'une quantité prédéterminée de produits fournie au transporteur d'alimentation du jeteur.

La correction du nombre de tops introduits dans le compteur-décompteur s'effectue dans le sens de la diminution ou de l'augmentation dudit nombre suivant la forme de réalisation de l'invention prévue.

Les moyens de contrôle précités sont constitués par une bascule intégratrice placée à l'entrée du transporteur d'alimentation du jeteur, ladite bascule intégratrice émettant un signal qui agit sur les moyens de commande du décalage, par l'intermédiaire d'une mémoire, lorsqu'une masse prédéterminée de produits a été mesurée.

En variante, lesdits moyens de contrôle sont constitués par une trémie-tampon placée en amount du transporteur d'alimentation du jeteur, et par un extracteur-doseur équipant ladite trémie-tampon de manière à maintenir constant le débit des produits amenés audit transporteur d'alimentation.

Suivant une première forme de réalisation, l'installation qui comporte un jeteur animé d'un mouvement circulaire de va-et-vient au-dessus du tas en formation, par un moteur d'entrainement, est caractérisée en ce que le compteur-décompteur décompte le nombre de tops délivrés par le détecteur de rotation au cours de la rotation en sens aller du jeteur, et enregistre, lorsque le jeteur est arrivé en extrémité du tas, des tops en nombre correspondant à la rotation en retour du jeteur, ce nombre étant éventuellement diminué du nombre du tops correspondant à l'angle de décalage lorsque le contenu de compteur-décompteur est à zéro.

Suivant une deuxième forme de réalisation, l'installation qui comporte un jeteur animé d'un mouvement circulaire continu au-dessus du tas en formation, par un moteur d'entrainement, ledit jeteur, constitué par deux transporteurs placés en opposition, étant alimenté en produits, par l'intermédiaire d'une goulotte à deux positions opposées de déversement, ladite goulotte, située au-dessus des deux transporteurs du jeteur, comprenant des moyens de commutation de ses deux positions, est caractérisée en ce que les moyens de décalage à pas constant de l'origine du tas en formation comprennent un aimant fixe, un système de deux contacts électriques respectivement solidaires des transporteurs du jeteur et disposées à 180° l'un par rapport à l'autre, le compteur-décompteur décomptant le nombre de tops délivrés par le détecteur de rotation du jeteur, et enregistrant des tops en nombre correspondant à l'angle de rotation du jeteur compris entre la position angulaire de l'aimant et celle de l'origine du tas, lorsque l'un des contacts passe devant ledit aimant, ce nombre étant éventuellement augmenté du nombre de tops correspondant à l'angle de décalage, le basculement de la goulotte étant commandé lorsque, le jeteur étant arrivé à l'origine du tas, le contenu de compteur-décompteur est à zéro.

L'invention sera mieux comprise en se référant à la description qui suit, faite en regard des dessins annexés, concernant différentes formes de réalisation de l'invention données à titre d'exemples non limitatifs.

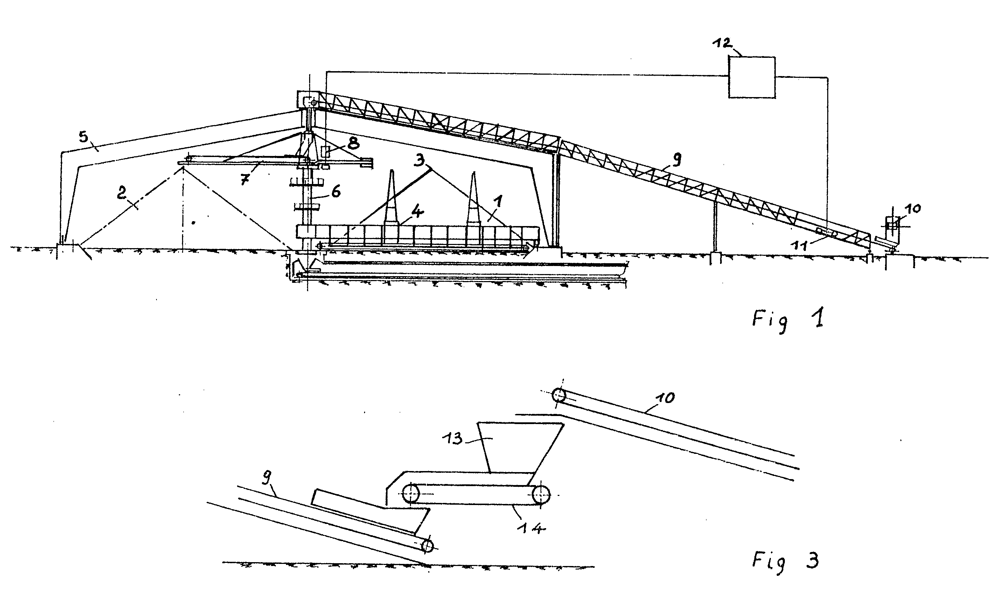

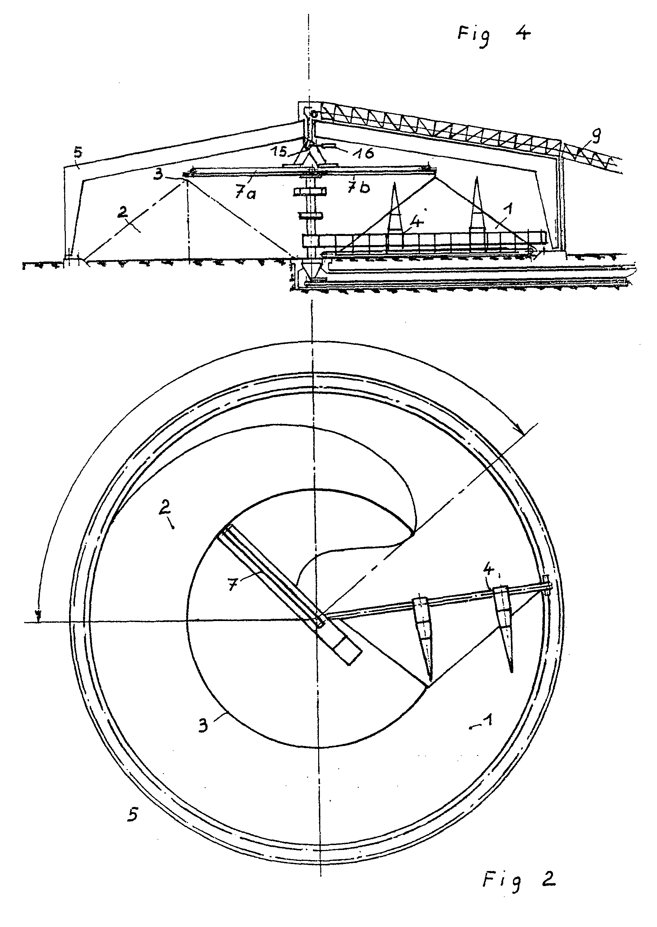

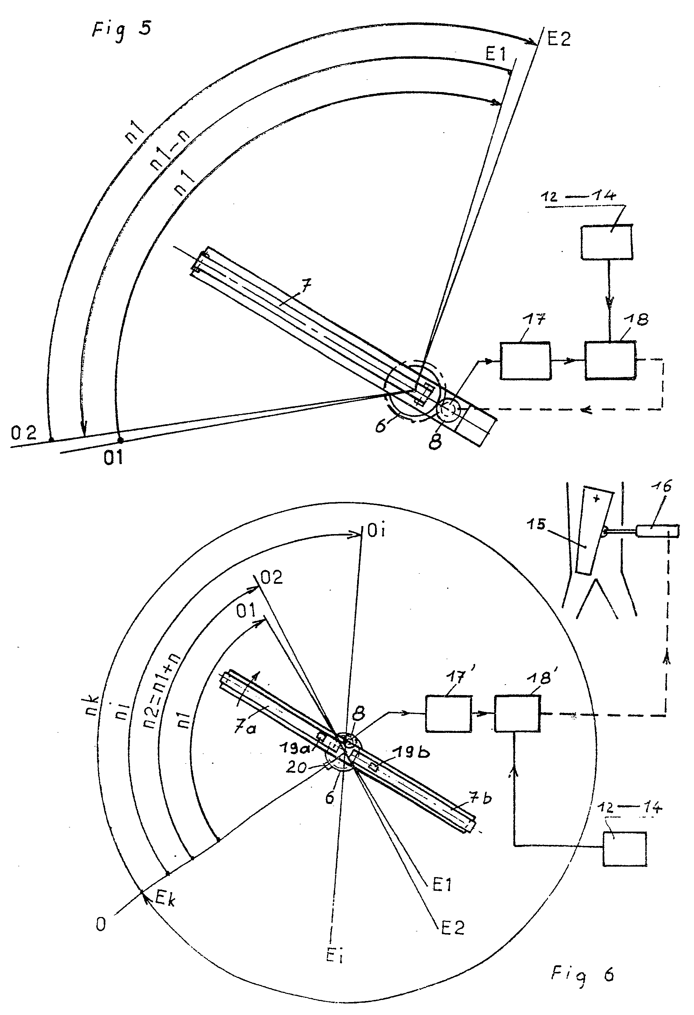

La figure 1 est une vue en élévation d'une installation réalisée suivant une première forme de l'invention; la figure 2 est une vue de dessus du parc; la figure 3 est une vue partielle d'une installation analogue à celle de la figure 1 correspondant à une variante de réalisation; la figure 4 est une vue en élévation d'une installation réalisée suivant une deuxième forme de l'invention; la figure 5 illustre, sous la forme d'un schéma, le fonctionnement d'une installation suivant les figures 1 à 3; la figure 6 illustre, sous la forme d'un schéma, le fonctionnement d'une installation suivant la figure 4.

Sur les figures 1 et 2, on a représenté un parc de préhomogénéisation circulaire sur lequel des produits en vrac sont stockés suivant un tas du type dit continu ou sans fin. Le repère 1 désigne le tas entièrement constitué et le repère 2 le tas en cours de formation attenant au précédent qu'il prolonge suivant un trajet en arc de cercle. Le repère 3 désigne la ligne de faite des deux tas, ladite ligne de faite étant horizontale dans sa partie afférente au tas 1, et sensiblement inclinée par rapport à l'horizontale dans sa partie afférente au tas 2. Un appareil de reprise 4, de type usuel, est aménagé à l'extrémité du tas 1 opposée à celle qui est attenante au tas 2. A cette extrémité de reprise, le tas 1 présente une surface plane à trace horizontal radiale et inclinée par rapport à la verticale.

Une structure 5 en forme de halle circulaire recouvre le parc. Au centre de ce dernier, est aménagé un poteau vertical 6 constituant le support d'un jeteur polaire 7 animé d'un mouvement circulaire de va-et-vient au-dessus du tas 2 en formation. La rotation du jeteur 7 est commandée par un moteur 8 dans des conditions qui seront explicitées par la suite. Le jeteur 7 est alimenté par un transporteur 9 dont le châssis repose sur la structure 5. Un convoyeur 10 disposé en amont du transporteur 9 amène à ce dernier les produits à mettre en tas. Le repère 11 désigne une bascule intégratrice, de type connu, qui est disposée à l'entrée du transporteur 9 de manière à peser les produits amenés audit transporteur. Dès qu'une masse prédéterminée de produits a été enregistrée par la bascule 11, cette dernière émet un signal qui commande le moteur 8, par l'intermédiare d'une mémoire 12, de telle sorte que l'origine du trajet en arc de cercle parcouru par le jeteur 7 est décalé d'un pas constant calculé en fonction de ladite masse. Les moyens permettant de commander ce décalage seront décrits plus loin, en référence à la description du mode de fonctionnement de l'installation. Entre deux décalages successifs, le jeteur 7 évolue par passes successives d'aller et de retour.

Suivant la variante d'exécution représentée sur la figure 3 le convoyeur 10 déverse les produits à mettre en tas sur le transporteur 9 par l'intermédiaire d'une trémie-tampon 13 munie à sa partie inférieure d'un extracteur-doseur 14 formé, par exemple, par une bande transporteuse dont la capacité de transport est adaptée à celle du convoyeur 10. Dans le cas de cette variante, l'installation ne comporte ni bascule intégratrice telle que 11, ni mémoire telle que 12. Grâce à la trémie 13 et à l'extracteur-doseur 14, on assure le fonctionnement du jeteur 7 à débit constant. Le jeteur 7 évolue, comme précédemment, par passes aller et retour. Les origines, et par conséquent les extrémités, des courses du jeteur 7 sont ice décalées d'un pas constant, calculé en fonction du débit, après chaque passe ou après un nombre donné de passes. Un dispositif non représenté, arrête le fonctionnement de l'extracteur-doseur 14 et celui du jeteur 7 lorsque la quantité de produits présente dans la trémie 13 n'est pas suffisante pour terminer une passe.

Sur la figure 4 qui représente une installation réalisée suivant une autre forme de l'invention, on a conservé les mêmes repères que sur les figures précédentes pour désigner les éléments identiques ou techniquement équivalents. Le jeteur 7 présente ici deux branches, 7a et 7b, constituées par des transporteurs disposés symétriquement par rapport à l'axe de rotation dudit jeteur. Ce dernier est animé d'un mouvement de rotation continu à vitesse constante. Les produits transportés par le transporteur 9 sont déversés sur le transporteur 7 a ou 7 b se trouvant au-dessus du tas 2 en formation par l'intermédiaire d'une goulotte 15 à deux positions qui est disposée au-dessus des transporteurs 7 a et 7 b. Le décalage des origines des trajets de déversement du jeteur 7 s'effectue par déplacement des instants de basculement de la goulotte 15 munie à cet effet d'un vérin 16 assurant le passage de l'une à l'autre position de ladite goulotte. Pour commander ce décalage on peut faire appel à l'une ou l'autre des deux méthodes que l'on a précédemment exposées.

Dans un premier cas le décalage est commandé par le signal émis par une bascule intégratrice, telle que 11, lorsqu'une masse prédéterminée de produits a été pesée à l'entrée du transporteur 9. En l'absence de stockage tampon à l'amont dudit transporteur, l'angle au centre fait par le tas en formation 2 est de 180°.

Dans un deuxième cas, le décalage est commandé à chaque rotation ou après un nombre donné de rotations, l'alimentation du jeteur 7 étant assurée à débit constant par un dispositif tel que celui formé par la trémie-tampon 13 et son extracteur-doseur 14. Il est alors possible d'effectuer la mise en tas sur un angle inférieur à 180° en interrompant la marche de l'extracteur-doseur 14 lorsque la longueur désirée du trajet en arc de cercle est atteinte.

On va maintenant décrire de façon détaillée les moyens permettant de commander le décalage à pas constant, en référence au mode de fonctionnement d'une installation suivant l'une ou l'autre des deux formes de réalisation qui viennent d'être décrites.

La figure 5 est relative à une installation à jeteur polaire simple 7, telle que représentée sur les figures 1 à 3.

Un détecteur 17 monté sur l'arbre du moteur 8 contrôle l'angle de rotation du jeteur 7. Ce détecteur délivre un certain nombre $N$ de tops pour une rotation de 360°. La formation d'une couche correspond à un angle de rotation constant, inférieur à 360°, correspondant à $n_1$ tops. Le décalage des origines des trajets en arc de cercle du jeteur 7 est égal à un angle constant de faible valeur correspondant à $n$ tops. Les positions $O_1$ et $E_1$ désignent respectivement l'origine et l'extrémité du trajet du jeteur 7 à un instant donné, donc l'origine et l'extrémité du tas 2 en formation.

Le moteur 8 est couplé à un compteur-décompteur 18 qui affiche un contenu de $n_1$ tops à l'instant où le jeteur 7 se trouve dans la position $O_1$. Le jeteur 7 se déplace jusqu'à la position $E_1$ correspondant à l'extrémité de sa course, tandis que le compteur-décompteur 18 voit son contenu diminué de la quantité $n_1$ de tops délivrés par le détecteur 17. Lorsque la course aller est terminée, le compteur-décompteur est à zéro. Le jeteur 7 est alors à l'arrêt et, en l'absence d'information particulière, la valeur $n_1$ est à nouveau introduite dans le compteur-décompteur 18. Le jeteur 7 revient alors en arrière, tandis que le contenu de compteur-décompteur 18 diminue pour revenir à zéro lorsque le jeteur 7 atteint la position $O_1$. Par contre, le jeteur 7 étant en position $E_1$, si une information de décalage est reçue, le compteur-décompteur 18 se trouve alors affecté de la valeur $(n_1—n)$. La jeteur 7 revient en sens inverse, tandis que le compteur-décompteur voit son contenu diminuer jusqu'à zéro, ce qui provoque l'arrêt du jeteur 7. Cette fois, le jeteur 7 est arrêté en position $O_2$, nouvelle origine décalée par rapport à $O_1$ d'un angle correspondant à $n$ tops au détecteur 17. La valeur $n$ correspond à la différence entre un retour à partir de $E_1$ sans information de décalage correspondant à $n_1$ tops, et un retour à partir de $E_1$ avec une information de décalage correspondant à $(n_1—n)$ tops. Dans le nouveau sens aller à partir de $O_2$, la valeur $n_1$ est réintroduite dans le compteur-décompteur 18, permettant ainsi de définir une nouvelle extrémité $E_2$.

Dans le cas d'une installation suivant figure 3, l'information de décalage peut être délivrée après chaque course aller. Le jeteur 7 avance alors d'un pas constant après chaque passe aller retour. L'information de décalage peut aussi être délivrée après un nombre donné de passes. Dans ce cas, on introduit dans le compteur-décompteur 18 une valeur correspondant au nombre de passes désirées, soit un multiple de $n_1$. L'information de décalage est alors délivrée lorsque le contenu de compteur-décompteur est revenu à zéro, ce contenu étant diminué de $n_1$ tops à chaque extrémité d'une course aller du jeteur 7.

Dans le cas d'une installation suivant figure 1, l'information de décalage est délivrée lorsqu'une masse prédéterminée de produits a été enregistrée par la bascule-intégratrice 11. Le jeteur 7 peut alors se trouver dans n'importe quelle position par rapport aux extrémités $O_1$ et $E_1$ de sa course. L'information est alors mise en mémoire en 12 jusqu'à ce que le jeteur 7 ait atteint l'extrémité $E_1$ de sa course aller.

La figure 6 est relative à une installation à jeteur 7 formé de deux transporteurs opposés 7a—7b, telle que représentée sur la figure 4.

On admettra dans ce qui suit la mise en tas s'effectue sur un angle de 180°.

Deux contacts électriques 19a et 19b positionnés de manière identique par rapport aux deux transporteurs, respectivement 7a et 7b, et fixes par rapport à ceux-ci, délivrent une information lorsqu'ils passent devant un aimant 20 fixé sur le poteau 6. Les deux contacts 19a et 19b sont décalés de 180° l'un par rapport à l'autre. On suppose qu'à un instant donné l'origine $O_1$ et l'extrémité $E_1$ du tas en formation 2 soient définies par les positions des contacts 19a et 19b de jeteur 7. L'aimant 20 définit sur le trajet en arc de cercle un point de référence O. Lorsque le contact 19a passe devant le point O, un compteur-décompteur 18' couplé au moteur 8 sur l'arbre duquel est monté une détecteur 17', est affecté d'une valeur $n_1$ qui correspond au nombre de tops délivrés par le détecteur 17' lorsque le contact 19 a passé de la position O à la position $O_1$. Le jeteur 7 tournant d'une façon continue, le compteur-décompteur 18' voit son contenu diminué d'une unité à chaque top délivré par le détecteur 17', et lorsque le contact 19 a est en position $O_1$, le compteur-décompteur 18' est à zéro. Ceci commande le basculement de la goulotte 15 par le vérin 16, de manière à permettre le début d'une couche par le transporteur 7 a, par exemple, et l'arrêt de la couche précédemment formée par le transporteur 7b. Le jeteur 7 poursuit sa rotation jusqu'à la position où le contact 19b passe devant le point O, et, en l'absence d'information particulière, le compteur-décompteur 18' est alors affecté de la valeur $n_1$. Lorsque le contact 19b passera en position $O_1$, le compteur-décompteur 18' sera de nouveau à zéro, d'où la commande d'un nouveau basculement de la goulotte 15 par le vérin 16 et ainsi de suite. Un tel processus conduit à superposer des couches sur la zone définie par les positions $O_1$ et $E_1$. Si, par contre, l'un des contacts 19 a ou 19b, arrivant en position 0, une information de décalage des extrémités est donnée, le compteur-décompteur 18' se trouve alors affecté d'une valeur égale au nombre n de tops correspondant à l'angle de décalage désiré. Le jeteur 7 étant en rotation permanente, une nouvelle origine $O_2$ sera définie, décalée par rapport à l'origine précédente $O_1$ d'un angle correspondant à n tops.

Des origines successives $O_1$, $O_2$ ..., $O_i$, ... et des extrémités correspondantes $E_1$, $E_2$, ..., $E_i$ ... seront ainsi définies par totalisations successives de n tops dans le compteur-décompteur 18'.

Chaque fois que la valeur $n_k$ du compteur-décompteur 18' atteindra une valeur correspondant à 180° d'angle de rotation de jeteur 7, la valeur $n_k$ pourra être remplacée par zéro. Les relations entre les contacts 19a et 19b, et bien extendu, celles entre les transporteurs 7a et 7b seront inversées.

Il va de soi que l'invention couvre les variantes de réalisation résultant du remplacement de l'un quelconque des moyens décrits par un moyen techniquement équivalent, dans les limites définies par les revendications.

## Revendications

1. Installation de stockage de produits en vrac sur un parc d'homogénéisation circulaire où les produits sont déposés suivant des couches superposées ayant en couple la forme d'un chevron, et dont la ligne de faîte est sensiblement inclinée par rapport à l'horizontale, de façon à former un tas (2) de section régulièrement décroissante le long d'un trajet en arc de cercle, comportant un jeteur (7) animé d'un mouvement circulaire au-dessus du tas (2) en formation, autour d'un arbre d'entrainement, un transporteur d'alimentation dudit jeteur, et des moyens permettant d'effectuer le décalage de l'origine du trajet en arc de cercle en fonction de la quantité de produits amenés au transporteur d'alimentation, caractérisée en ce que lesdits moyens de décalage comprennent un détecteur de rotation (17 ou 17') de l'arbre d'entrainement du jeteur (7) délivrant un nombre de tops proportionnel à l'angle de rotation dudit jeteur, et un compteur-décompteur (18 ou 18') dans lequel on introduit périodiquement un nombre constant de tops proportionnel à l'étendue angulaire du tas (2) en formation, ledit nombre étant corrigé périodiquement d'un nombre de tops constant, correspondant à un décalage à pas constant, délivrés par des moyens de contrôle d'une quantité prédéterminée de produits fournie au transporteur d'alimentation (9) du jeteur (7).

2. Installation suivant la revendication 1, caractérisée en ce que lesdits moyens de contrôle sont constitués par une bascule intégratrice (11) placée à l'entrée du transporteur d'alimentation (9) du jeteur (7), ladite bascule intégratrice émettant un signal qui agit sur les moyens de commande de décalage, per l'intermédiaire d'une mémoire (12), lorsqu-une masse prédéterminée de produits a été mesurée.

3. Installation suivant la revendication 1, caractérisée en ce que lesdits moyens de contrôle sont constitués par une trémie-tampon (13) placée en amont du transporteur d'alimentation (9) du jeteur (7), et par un extracteur-doseur (14) équipant ladite trémite-tampon de manière à maintenir constant le débit des produits amenés audit transporteur d'alimentation.

4. Installation suivant l'une des revendications 1 à 3, comportant un jeteur (7) animé d'un mouvement circulaire de va-et-vient au-dessus du tas (2) en formation, par un moteur d'entrainement (8), caractérisée en ce que le compteur-décompteur (18) décompte le nombre de tops délivrés par le détecteur de rotation (17) au cours de la rotation en sens aller du jeteur (7), et enregistre, lorsque le jeteur (7) est arrivé en extrémité du tas (2), des tops en nombre correspondant à la rotation en retour du jeteur (7), ce nombre étant éventuellement diminué du nombre de tops correspondant à l'angle de décalage lorsque le contenu du compteur-décompteur (18) est à zéro.

5. Installation suivant l'une des revendications 1 à 3, comportant un jeteur (7) animé d'un mouvement circulaire continu au-dessus du tas (2) en formation, par un moteur d'entrainement, ledit jeteur, constitué par deux transporteurs (7a, 7b) placés en opposition, étant alimenté en produits par l'intermédiaire d'une goulotte (15) à deux positions opposées de déversement, ladite goulotte, située au-dessus des deux transporteurs du jeteur, comprenant des moyens (16) de commutation de ses deux positions, caractérisée en ce que les moyens de décalage à pas constant de l'origine du tas en formation comprennent un aimant fixe (20), un système de deux contacts électriques (19a et 19b) respectivement solidaires des transporteurs (7a et 7b) du jeteur (7) et disposées à 180° l'un par rapport à l'autre, le compteur-décompteur (18') décomptant le nombre de tops délivrés par le détecteur de rotation (17') de jeteur (7), et enregistrant des tops en nombre correspondant à l'angle de rotation du jeteur (7) compris entre la position angulaire de l'aimant (20) et celle de l'origine de tas (2), lorsque l'un des contacts (19a ou 19b) passe devant ledit aimant, ce nombre étant éventuellement augmenté du nombre de tops correspondant à l'angle de décalage, le basculement de la goulotte (15) étant commandé lorsque, le jeteur (7) étant arrivé à l'origine du tas (2), le contenu du compteur-décompteur (18') est à zéro.

## Patentansprüche

1. Anlage zur Lagerung von Schüttgütern in einem Kreismischbett, auf dem das Gut in sich überlagernden Schichten aufgeschüttet wird, die im Querschnitt eine Chevron-Form haben, und deren Scheitellinie gegenüber der Horizontale merklich geneigt ist, derart, dass eine Halde (2) mit regelmässig abnehmendem Querschnitt längs einer kreisbogenförmigen Fahrstrecke aufgebaut wird, bestehend aus einem Absetzer, der eine Kreisbewegung um eine Abtriebswelle über der im Aufbau befindlichen Halde (2) ausführt, einem Förderer zur Beschickung des Absetzers und Mitteln zur Verschiebung des Ausgungspunktes der kreisbogenförmigen Fahrstrecke in Abhängigkeit von der dem Beschickungsförderer zugeführten Gutmenge, dadurch gekennzeichnet, dass die Verschiebungsmittel einen Detektor (17 bzw. 17′) der Schwenking der Absetzerantriebswelle, der eine zum Schwenkwinkel des Absetzers (7) proportionale Anzahl von Impulsen liefert, sowie einen Zweirichtungszähler (18 bzw. 18′) umfassen, in den eine konstante und zur Winkelgrösse der im Aufbau befindlichen Halde (2) proportionale Anzahl von Impulsen regelmässig eingeführt wird, wobei diese Anzahl um eine konstante, einer Konstantteilungsverschiebung entsprechende Anzahl von Impulsen regelmässig korrigiert wird, die durch Mittel zur Kontrolle einer vorgegebenen, dem Beschickungsförderer (9) des Absetzers (7) zugeführten Gutmenge geliefert werden.

2. Anlage nach Anspruch 1, dadurch gekennzeichnet, dass die Kontrollmittel aus einer am Eintritt des Beschickungsförderers (9) des Absetzers (7) angeordneten Zählwaage (11) bestehen, die ein auf die Steuermittel der Verschiebung über einen Speicher (12) wirkendes Signal gibt, wenn eine vorgegebene Gutmenge gemessen wurde.

3. Anlage nach Anspruch 1, dadurch gekennzeichnet, dass die Kontrollmittel aus einem dem Beschickungsförderer (9) des Absetzers (7) vorgeschalteten Pufferbunker (13) sowie einem Dosierabzugsförderer (14) bestehen, der den Pufferbunker derart ausrüstet, das die dem Beschickungsförderer zugeführte Gutfördermenge konstant bleibt.

4. Anlage nach einem der Ansprüche 1 bis 3, bestehend aus einem Absetzer (7), der eine durch einen Abtriebsmotor (8) bewirkte hin- und hergehende Kreisbewegung über der im Aufbau befindlichen Halde (2) ausführt, dadurch gekennzeichnet dass der Zweirichtungszähler (18) die durch den Schwenkungsdetektor (17) bei der Hinschwenking des Absetzers (7) gelieferte Anzahl von Impulsen abwärtszählt und eine der Rückschwenkung des Absetzers (7) entsprechende Anzahl von Impulsen registriert, wenn der Absertzer (7) am Ende der Halde (2) gelangt ist, wobei diese Anzahl um die dem Verschiebungswinkel entsprechende Anzahl von Impulsen eventuell verkleinert wird, wenn der vom Zweirichtungszähler (18) angezeigte Wert gleich Null ist.

5. Anlage nach einem der Ansprüche 1 bis 3, unfassend einen Absetzer (7), der eine durch einen Antriebsmotor (8) bewirkte hin- und hergehende Kreisbewegung über der im Aufbau befindlichen Halde (2) ausführt, aus zwei gegenüberliegenden Förderern (7a, 7b) zusammengesetzt ist und über eine zwei gegenüberliegende Schüttstellen besitzende Schurre (15) beschickt wird, wobei diese oberhalb der beiden Förderer des Absetzers angeordnete Schurre mit Mitteln (16) zur Umschaltung ihrer beiden Stellungen versehen ist, dadurch gekennzeichnet, dass die Konstantteilungsverschiebungsmittel des Ausgangspunktes der im Aufbau befindlichen Halde (2) einen festen Magnet (20), ein System von zwei Elektrokontakten (19a und 19b), die jeweils mit den Förderern (7a und 7b) des Absetzers (7) verbunden sind und miteinander einen Winkel von 180° bilden, sowie den Zweirichtungszähler (18) umfassen, der die Anzahl der durch den Schwenkungsdetektor (17′) des Absetzers (7) abwärtszählt und eine Anzahl von Impulsen registriert, die dem durch die Winkelstellung des Magnetes (20) und der des Haldenausgangspunktes gebildeten Schwenkwinkel entspricht, wenn einer der Kontakte (19a bzw. 19b) am Magnet vorbeigeht, wobei diese Anzahl um die dem Verschiebungswinkel entsprechende Anzahl von Impulsen eventuell vergrössert wird, und die Kippbewegung der Schurre (15) gesteuert wird, wenn der Absetzer (7) am Ausgangspunkt der Halde (2) gelangt ist und der vom Zweirichtungszähler (18′) angezeigte Wert gleich Null ist.

## Claims

1. Installation for bulk product storage in a circular blending area where the product is piled in successive layers with, in cross-section, the shape of a chevron, the top of which being slightly inclined with respect to the horizontal, in such a way as to form a stockpile (2) regularly decreasing in size along a path which follows the arc of a circle, the installation including a stacker (7) with a circular movement above the stockpile (2) which is being formed around a drive shaft, a feed conveyor for the stacker, and a system controlling the shifting of the origin of the path in the arc of a circle as a function of the quantity of the product brought to the feed conveyor, the installation being characterised by the fact that the said shifting system includes a stacker (7) drive shaft rotation detector (17 or 17′) which delivers a number of pulses proportional to the angle of rotation of the stacker, and a count-down meter (18 or 18′) into which is introduced periodically a constant number of pulses proportional to the angular extent of the stockpile (2) which is being formed, this number being corrected periodically by a constant number of pulses which corresponds to the shift at an even step, the pulses being generated by a system monitoring a predetermined quantity of the product supplied to the feed conveyor (9) of the stacker (7).

2. Installation according to claim 1, characterised by the fact that the said monitoring system consists of an integrating scale (11) placed on the inlet side of the feed conveyor (9) of the stacker (7), this integrating scale transmitting a signal which actuates the shifting system, through a memory unit (12) when a predetermined weight of products has been measured.

3. Installation according to claim 1, characterised by the fact that the said monitoring system consists of a storage-bin (13) placed upstream of the feed conveyor (9) of the stacker (7), and a weighfeeder (14) allowing the storage-bin to maintain constant the product flow-rate to the feed conveyor.

4. Installation according to claim 1, 2 or 3, involving a stacker (7) with a circular to-and-fro movement placed above the stockpile (2) which is being formed, operated by a drive motor (8), characterised by the fact that the count-down meter (18) counts down the number of pulses delivered by the rotation detector (17) during forward rotation of the stacker (7) and records a number of pulses corresponding to the reverse rotation of the stacker (7) when it has reached the end of the pile (2), this number of pulses being reduced by the number of pulses corresponding to the angle of shift when the count-down meter (18) is at zero.

5. Installation according to claim 1, 2 or 3 involving a stacker (7) with a continuous motor-driven circular movement above the stockpile (2) which is being formed, this stacker being made up of two conveyors (7a, 7b) placed in opposition and fed with the product by a chute (15) with two opposite pouring positions, said chute placed above the stacker's two conveyors, having means (16) for switching from either one of its positions to the other, this installation being characterised by the fact that the system which controls shifting at an even step from the origin of the stockpile being formed includes a stationary magnet (20) and two electrical contacts (19a and 19b) respectively integral with the conveyors (7a and 7b) of the stacker (7) and placed at 180° from one another, the count-down meter (18') counting down the number of pulses delivered by the rotation detector (17') of the stacker (7) and recording a number of pulses corresponding to the angle of rotation of the stacker (7) between the angular positions of the magnet (20) and the origin of the pile (2) when one of the contacts (19a and 19b) passes in front of the magnet, this number being increased by the number of pulses corresponding to the angle of shift, and the chute being tilted when, after the stacker (7) has reached the origin of the stockpile, the count-down meter is at zero.

Fig 1

Fig 3

0011001

Fig 4

Fig 2

2

*Fig 5*

*Fig 6*